# EUROPEAN PATENT APPLICATION

(11) **EP 2 939 939 A1**
(43) Date of publication of application: **04.11.2015**
(21) Application number: 13869162.1
(22) Date of filing: 30.10.2013
(51) Int. Cl.: B65D 3/06, B65D 81/36, A01G 9/02, A47G 19/22

(54) **ECO-FRIENDLY DISPOSABLE CUP USABLE AS FLOWERPOT**

(30) Priority: 31.12.2012 KR 20120158140
(71) Applicant: Song, Ha Kyun, Seoul 137-072 (KR)
(72) Inventor: Song, Ha Kyun, Seoul 137-072 (KR)
(74) Representative: Dr. Weitzel & Partner
(86) International application number: PCT/KR2013/009739
(87) International publication number: WO 2014/104555

(57) **Abstract**

The present invention relates to an eco-friendly disposable cup for beverage takeout, which can be easily assembled and used without a water basin in an office, home, or the like. The present invention is useful in that the disposable cup, on which a lid is formed, has a perforated line formed such that the lid can be inserted into said cup and a hollow pipe formed at the center thereof so as to function as a partition wall between the soil and a reservoir. Further, the invention is formed such that the supplied water in the reservoir can be naturally absorbed through soil pores.

## Description

### [Technical Field]

The present invention relates to an eco-friendly disposable cup for a takeout beverage which may be easily assembled into a flowerpot without a water tray in an office, the home, and the like.

### [Background Art]

Recently, products of disposable cups for takeout have been launched so that individuals may drink black coffee, coffee with cream, and various teas or beverages according to their tastes.

However, users of disposable cups have increased but disposable cups are not recycled, instead being discarded, thus causing environmental problems.

Further, conventional flowerpots which are used to set up plants therein are separately manufactured using a synthetic resin, a material for pottery or the like, thus allowing users to enjoy the plants therein. These flowerpots cause cost increase, if they are formed of a new material, and do not deviate from designated shapes, thus not being eco-friendly.

However, if a flowerpot is formed of a material for pottery, the flowerpot may have a fine external appearance and be formed into various shapes if it is made by hand, but is easily broken and heavy. Further, in order to form a flowerpot of a material for pottery, a series of processes is required and, thus, long time is taken, convenience are caused, and manufacturing cost increases.

These flowerpots are manufactured using raw materials and, thus, material costs increase and it is difficult to manufacture the flowerpots without raw materials.

### [Disclosure]

### [Technical Problem]

Therefore, the present invention has been made in view of the above problems, and it is an object of the present invention to provide an eco-friendly disposable cup with a lid which may be reused as a flowerpot so as to prevent environmental pollution.

It is another object of the present invention to provide an eco-friendly disposable cup which may be reused as a flowerpot in daily life so as to reduce resources and costs in an office, a school and the home and to assist improvement of indoor environments.

### [Technical Solution]

In accordance with an aspect of the present invention, the above and other objects can be accomplished by the provision of an eco-friendly disposable cup usable as a flowerpot including a lid, wherein a perforated line is formed on the lid so that the lid may be inserted into the cup, a hollow pipe is formed at the center of the lid and functions as a partition between soil and a reservoir, and water supplied to the reservoir is naturally absorbed through soil pores.

### [Advantageous Effects]

An eco-friendly disposable cup usable as a flowerpot in accordance with the present invention may use the aesthetic sense thereof to create an environment in an office, a school and the home and have resource recycling effects.

As compared to conventional flowerpots, the eco-friendly disposable cup in accordance with the present invention has effects, as below:
First, the eco-friendly disposable cup of the present invention does not have drain holes on the lower part thereof and may thus solve inconvenience caused by falling of water drops to the ground during water supply.
Second, the eco-friendly disposable cup of the present invention does not have drain holes and a water tray and may thus be convenient in movement and installation.
Third, the eco-friendly disposable cup of the present invention reabsorbs discarded water through an absorption basin and may thus conserve water.
Fourth, the eco-friendly disposable cup of the present invention reduces the frequency of watering twice or more, as compared to conventional flowerpots, allows plants to live for a long time without watering and may thus be convenient in management.

### [Description of Drawings]

The above and other objects, features and other advantages of the present invention will be more clearly understood from the following detailed description taken in conjunction with the accompanying drawings, in which:
FIG. 1 is a perspective view illustrating an eco-friendly disposable cup usable as a flowerpot in accordance with an embodiment of the present invention;
FIG. 2 is an exploded perspective view illustrating cutting of a lid from the cup in accordance with the present invention and then insertion of the lid into the inner surface of the cup;
FIG. 3 is a view illustrating the eco-friendly disposable cup in use in accordance with the present invention;
FIG. 4 is a view illustrating the length of a hollow pipe formed on the cup in accordance with the present invention;
FIG. 5 is a view illustrating the tapered shape of hollow pipes so as to stack lids;
FIG. 6 is a view illustrating a lid having a dome structure in accordance with a further embodiment of the present invention;
FIG. 7 is a view illustrating a lid having a wick in accordance with another embodiment of the present invention;
FIG. 8 is a view illustrating the cup in accordance with the present invention in which plants are set up; and
FIG. 9 is a perspective view illustrating a lid in accordance with the present invention on which support legs are provided.

### [Best Mode]

Hereinafter, an eco-friendly disposable cup usable as a flowerpot in accordance with preferred embodiments of the present invention will be described in detail with reference to the annexed drawings.

The terms or words used in the following description and the claims are not limited to conventional or dictionary meanings and should be interpreted as having meanings and definitions suitable for the technical sprit of the invention based on a principle that the inventor(s) may suitably define terms to describe the invention in a best mode.

Therefore, the description of elements stated in the specification and shown in the drawings has been made only for a better understanding of the present invention, and those skilled in the art will appreciate that various modifications, additions, and substitutions to the specific elements are possible, without departing from the scope and spirit of the invention as disclosed in the accompanying claims.

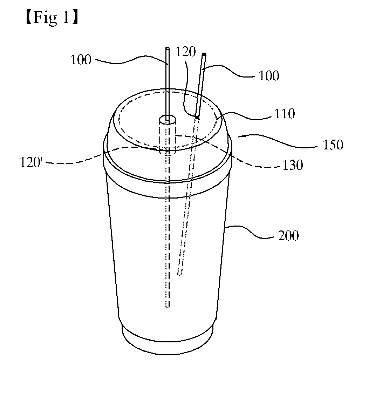

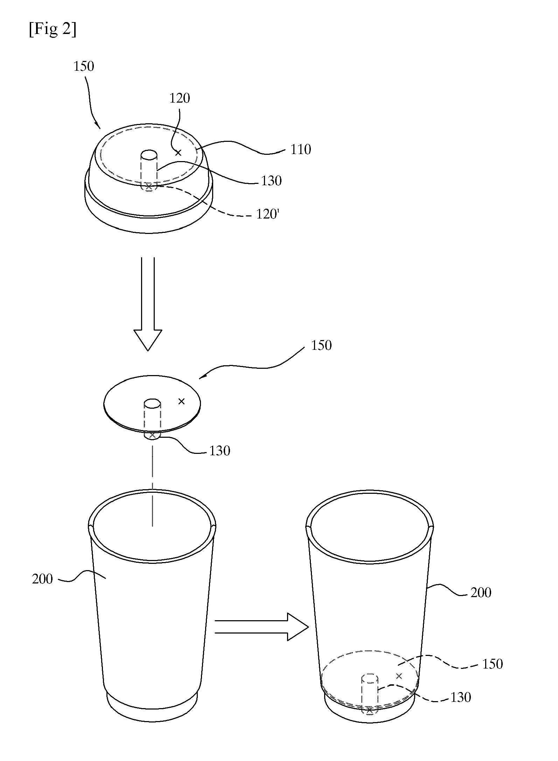

As exemplarily shown in FIGs. 1 to 8, an eco-friendly disposable cup usable as a flowerpot in accordance with the present invention which is provided with a lid is characterized in that a perforated line 110 is formed on the lid so that the lid may be inserted into the cup, and a hollow pipe 130 is formed at the center of the lid so as to serve as a partition between soil and a reservoir and to absorb water supplied into the reservoir through soil pores.

The hollow pipe 130 is formed at the center of the lid 150 and the perforated line 110 is formed on the lid 150 to cut the lid 150 along the perforated line 110 so that the cut part of the lid 150 may have a size suitable for insertion into the cup and the hollow pipe may contact the bottom surface of the cup. The lid include a cutting hole 120 into which a straw 100 may be inserted and the hollow hole 130. As needed, a straw may be inserted into a cutting hole 120' formed at the position of the hollow pipe.

The lid may be cut along the perforated line 110 so that the cut part of the lid is fitted with a staircase 190 formed at the lower part of the cup 200 and contacts the inner surface of the cup so as to support the weight of soil 220 and to prevent the soil 220 from leaking from the cup.

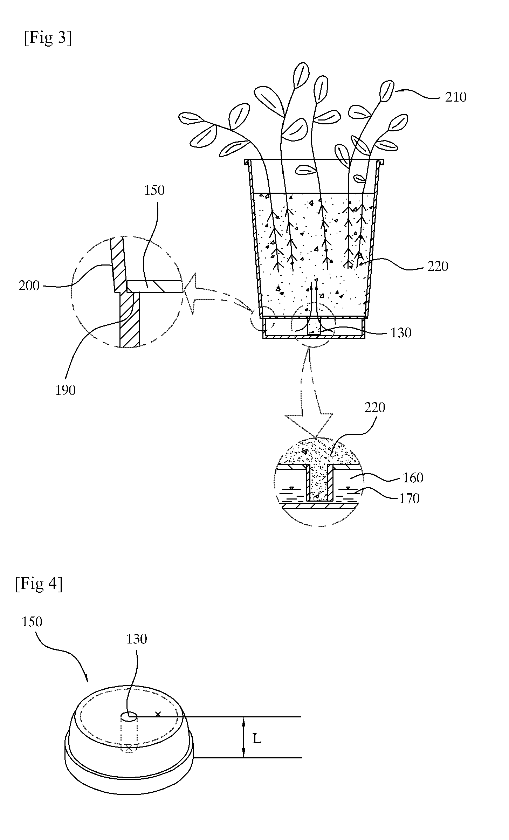

The hollow pipe 130 is provided with the cutting hole 120' formed at the upper part or lower part thereof so that a straw may be inserted into the cutting hole 120' and forms a path through which water 170 in a reservoir 160 moves upwards, and the cutting hole 120' has a small size so as to prevent the soil from leaking. As exemplarily shown in FIG. 4, the hollow pipe 130 formed on the lid may protrude downwards from the lower surface of the lid so as to have a length L of 10 cm or less.

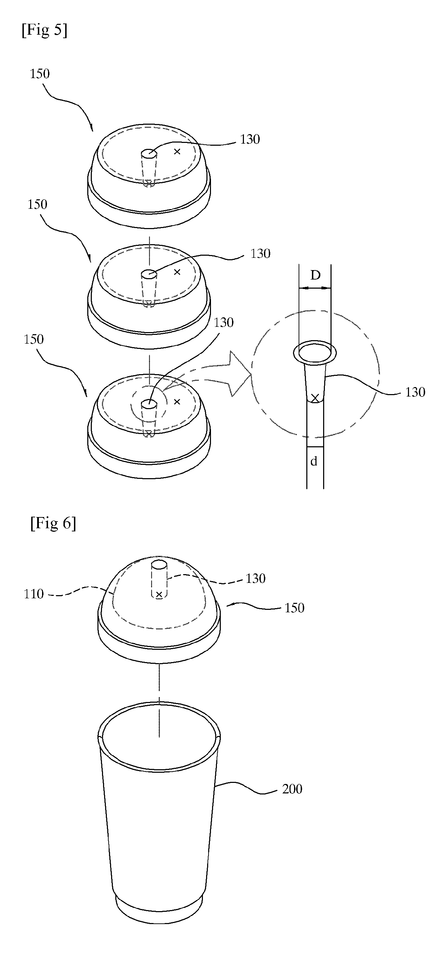

As exemplarily shown in FIG. 5, in the eco-friendly disposable cup usable as a flowerpot in accordance with the present invention, the hollow pipe has a tapered shape, in which the diameter D of the upper part of the hollow pipe is large and the diameter d of the lower part of the hollow pipe is small, so that the lid 150 may be stacked on another lid 150.

In an eco-friendly disposable cup usable as a flowerpot in accordance with a further embodiment of the present invention shown in FIG. 6, the upper part of a lid 150 has a dome structure, a hollow pipe 130 is formed at the center of the lid 150, and a perforated line 110 is formed at the edge of the lid 150 so as to form a cut part.

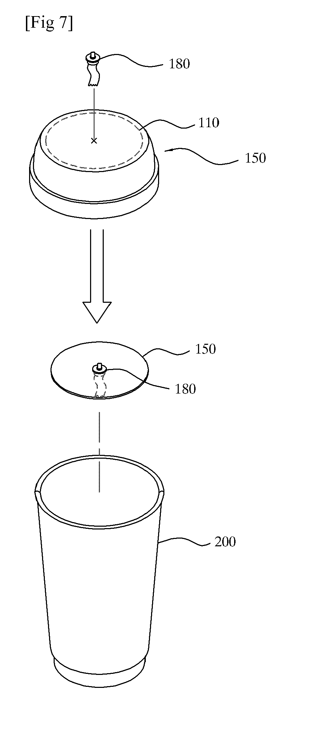

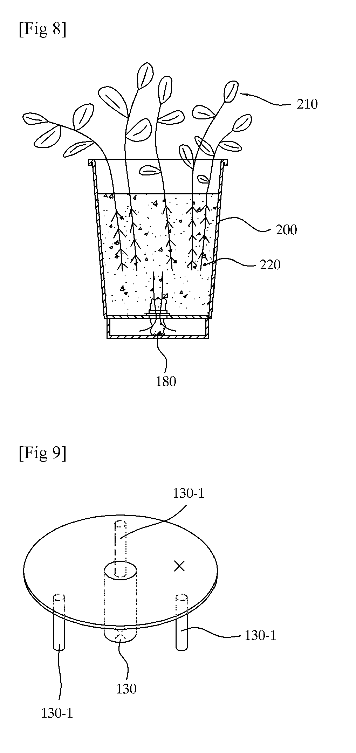

An eco-friendly disposable cup usable as a flowerpot in accordance with another embodiment of the present invention shown in FIGs. 7 and 8 is characterized in that a wick 180 is formed at the center of a lid 150.

FIG. 8 is a view illustrating the cup in which plants are set up and, thus, water in a reservoir is supplied to the upper part of the inside of the cup along the wick 180.

An eco-friendly disposable cup usable as a flowerpot in accordance with yet another embodiment of the present invention shown in FIG. 9 is characterized in that a supporting staircase is not provided and a plurality of supporting legs 130-1 is formed to support the load of soil.

Among general flowerpots for growing plants, in most flowerpots employing a vertical downward type water supply method, water is supplied to topsoil of the upper part of a flowerpot and then physically supplied to the rhizosphere of plants through soil pores based on gravity. In this case, when an excessively large amount of water is supplied, roots of the plants receive stress from the supplied water and, when an excessively small amount of water is supplied or water supply is stopped, no water is supplied to the roots of the plants and the plants wither and die. Such a phenomenon is caused by lack of moisture required by growing plants. If an excessively large amount of water is supplied, roots of plants become inflamed and rot due to excessive moisture gathered around the roots and, if an excessively small amount of water is supplied, roots and leaves of plants are dried and, consequently, the plants die.

Therefore, in the above-described eco-friendly disposable cup usable as a flowerpot in accordance with the present invention, the reservoir is formed on the lower surface of the cup, and supplied water is stored in the reservoir and supplied to the upper part of the cup, as needed, to prevent killing of plants due to excessive water supply and water shortage.

In the present invention, a cup with a lid is used, the cup and the lid may be made of various materials and have various shapes, and the aesthetics of the cup of the present invention contributes to create an environment in an office, a school and the home.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. An eco-friendly disposable cup usable as a flowerpot including a lid, wherein a perforated line is formed on the lid so that the lid may be inserted into the cup, a hollow pipe is formed at the center of the lid and functions as a partition between soil and a reservoir, and water supplied to the reservoir is naturally absorbed through soil pores.

2. The eco-friendly disposable cup according to claim 1, wherein the perforated line is configured such that a part of the lid cut along the perforated line has a sufficient size to be caught by a staircase formed at the inside of the cup or the inner surface of the cup.

3. The eco-friendly disposable cup according to claim 1, wherein the hollow pipe formed on the lid protrudes downwards from the lower surface of the lid so as to have a length L of 10 cm or less.

4. The eco-friendly disposable cup according to claim 1, wherein a wick is formed at the center of the lid.

5. The eco-friendly disposable cup according to claim 1, wherein the hollow pipe has a gradually decreasing diameter in the downward direction such that the diameter D of the upper part of the hollow pipe is large and the diameter d of the lower part of the hollow pipe is small, so as to stack the lid on another lid.

6. The eco-friendly disposable cup according to claim 1, wherein the lid includes supporting legs to support the lid.
